# EUROPEAN PATENT APPLICATION

(11) **EP 4 411 343 A1**
(43) Date of publication of application: **07.08.2024**
(21) Application number: 23154271.3
(22) Date of filing: 31.01.2023
(51) Int. Cl.: G01N 21/03, G01N 21/21, G01N 21/25, G01N 21/31, G01N 21/41, B01D 11/00, G01F 23/292, G01N 21/17, G01N 21/84

(54) **EVAPORATION APPARATUS AND METHOD FOR EVAPORATION**

(71) Applicant: Biotage AB, 751 03 Uppsala (SE)
(72) Inventor: TORMOD, Stig, 752 22 Uppsala (SE)
(74) Representative: Brann AB

(57) **Abstract**

Described is an evaporation method and apparatus for evaporation of a part of a liquid in a sample container, the evaporation apparatus comprising a sample holder for holding the sample container; a light source; a light detector configured to output an electronic signal indicative for a characteristic property of light received by the light detector; an optical fiber assembly configured to transfer light emitted by the light source along an optical path through at least a part of the sample container when placed in the sample holder, and to transfer light that travelled along the optical path to the light detector; and a controller in electrical contact with the light detector, wherein the controller is configured to obtain the electronic signal and to control the evaporation apparatus to terminate evaporation based on the electronic signal.

## Description

The present patent disclosure relates to the area of solvent evaporation. The present patent disclosure also relates to the field of liquid level detection. Particular embodiments concern an evaporation apparatus and method for evaporation of a part of a liquid in a sample container.

Evaporation apparatuses can be found in many types of laboratories, from drug discovery to analytical chemistry laboratories, often to remove solvent from a sample by evaporation of the solvent. The sample container containing the sample, which may comprise an analyte in a solvent is often heated to increase the vapor pressure of the solvent. The heating may be done by partially submerging the sample container in a heatable liquid bath or tank, such as a heated water bath. To increase the speed of evaporation, one type of evaporation apparatus uses a nozzle to direct a stream of gas in the sample container.

The analyte may, however, comprise sensitive components, such as certain proteins or polymers, that require at least some solvent to remain stable. The evaporation should therefore be stopped before all the solvent is evaporated. Evaporation apparatuses may comprise electronic optical detectors that are positioned at a certain level of the sample container in order to detect the liquid level in the sample container. These electronic optical detectors often fail, especially when submerged in the heated liquid bath, and require replacement and may cause loss of the analyte when malfunctioning during evaporation. Also, electronic components may cause sparks which is unsafe when in the vicinity of flammable fluids.

It is an object, among objects, of the present patent disclosure to provide improved evaporation apparatuses and methods.

According to a first aspect, there is provided an evaporation apparatus for evaporation of a part of a liquid in a sample container, the evaporation apparatus comprising: a sample holder for holding the sample container; a light source; a light detector configured to output an electronic signal indicative for a characteristic property of light received by the light detector; an optical fiber assembly configured to transfer light emitted by the light source along an optical path through at least a part of the sample container when placed in the sample holder, and to transfer light that travelled along the optical path to the light detector; and a controller in electrical contact with the light detector, wherein the controller is configured to obtain the electronic signal and to control the evaporation apparatus to terminate evaporation based on the electronic signal.

Beneficially, the evaporation apparatus which comprises the optical fiber assembly can place the light source and light detector at a distance from the sample container. In addition, electrical wiring towards the sample container is no longer required. This, among others, increases the safety of the evaporation apparatus when flammable fluids such as solvents are presents.

More generally, the controller may be configured to obtain the electronic signal and to control the evaporation apparatus to determine an evaporation end-point based on the electronic signal. The evaporation apparatus may then terminate the evaporation in case the evaporation endpoint is determined. The evaporation end-point may be determined when the liquid level is at or near the optical path.

In an embodiment, the optical path is offset relative to a longitudinal center axis of the sample container, when placed in the sample holder. The offset of the optical path may be achieved by the optical fiber assembly being arranged such that the optical path is offset relative to the central longitudinal axis along which the sample container may be positioned within the evaporation apparatus. The optical path thus does not cross the longitudinal axis but does go through the sample container when placed in the sample holder. In other words, the optical path has a non-zero angle compared to the walls of the sample container when placed in the sample holder. Beneficially, by this offset, more of the light has an angle compared the sample container walls which increases change in intensity when the medium inside the sample container changes from water to air, and thus improves the determination of when to terminate evaporation or the liquid level detection. In other words, there may be an increased sensitivity to a change in refractive index inside the sample container when more of the light has an angle relative to the sample container wall.

In an embodiment, the evaporation apparatus further comprises a reflector, comprising a reflective side arranged at an end of and towards the optical path. The reflector is preferably a retroreflector, such as a micro cube corner retroreflector. By using a reflector, the light is (at least partially) reflected back along the optical path, and either a receiving fiber end or the same fiber end from which the light originated can be placed at one side of the sample container position, thus reducing the number of fiber positions within the evaporation apparatus.

When using a retroreflector, more of the light is reflected in the same direction along the optical path, thus increasing the amount of light received back by the optical fiber assembly and subsequently received by the optical detector. Use of a micro cube corner retroreflector reduces the offset of the return path the light takes relative to the path towards the retroreflector compared to retroreflectors with larger optical solutions for reflecting back light.

Alternatively, the reflector may be a diffuse reflector. The diffuse reflector may be configured to reflect a first wavelength range have at least an overlap with a second wavelength range emitted by the light source.

In an embodiment, the reflector is arranged such that, when the sample container is placed in the sample holder, light that passed through the sample container is reflected at least partially in an opposite direction along the optical path.

In an embodiment, the optical fiber assembly is configured to: receive the light emitted by the light source; emit at least a part of the received light emitted by the light source along the optical path in which at least a part of the sample container is placeable; receive the light that travelled along the optical path; and emit at least a part of the received light that travelled along the optical path towards the light detector.

In an embodiment, the optical fiber assembly comprises one or more optical fibers comprising a first optical fiber end, a second optical fiber end and a third optical fiber end, wherein the one or more optical fibers are arranged such that the first optical fiber end is positioned to receive the light emitted by the light source; the second optical fiber end is positioned to emit the at least a part of the received light emitted by the light source along the optical path; and the third optical fiber end is positioned to emit the at least a part of the received light that travelled along the optical path towards the light detector.

In an embodiment, the reflector, preferably being a retroreflector, is arranged opposite the second optical fiber end of the one or more optical fibers, wherein the reflector is arranged to reflect light emitted by the second optical fiber end back towards the second optical fiber end.

In an embodiment, the optical fiber assembly comprises an optical fiber comprising the first optical fiber end, the second optical fiber end and the third optical fiber end,
wherein the first optical fiber comprises an optical splitter, wherein a first fiber optical path through the first optical fiber goes from the first optical fiber end to the second optical fiber end via the optical splitter, and a second fiber optical path goes from the second optical fiber end to the third optical fiber end via the optical splitter. In this way, it becomes possible that only the part of the fiber from the splitter towards the second optical fiber end should extend towards the sample container position within the evaporation apparatus. This limits the number of parts towards the sample container, leaving more volume for, for instance, adding more sample containers and/or reducing the size of the evaporation apparatus.

Alternatively, the one or more optical fibers may comprise a first optical fiber and a second optical fiber. The first optical fiber comprises the first optical fiber end and the second optical fiber end. The second optical fiber comprises the third optical fiber end and a fourth optical fiber end for receiving the light that passed along the optical path.

In an embodiment, the fourth optical fiber end is positioned opposite the second optical fiber end at the other end of the optical path. In this case, no reflector is needed. In an alternative embodiment the evaporation apparatus comprises the reflector, the fourth optical fiber end may be positioned adjacent to the second optical fiber end. The first and second optical fibers may then be bundled together inside the evaporation apparatus.

It is additionally an option to provide one or more of third to seventh optical fibers which may be bundled together. The first optical fiber may then be the fiber emitting light, while two or more, for instance, six, optical fibers are bundled around the first optical fiber. The second, third, etc., e.g. the seventh, optical fiber all guide light received to the optical detector in this embodiment.

The evaporation apparatus may comprise a plurality of sample container positions. In other words, the sample holder may comprise a plurality receiving openings for a corresponding plurality of sample containers. The optical fiber assembly may be configured to control the evaporation of all those sample containers.

In an embodiment, the optical splitter is configured to distribute light in a ratio in the range of 20:80 to 80:20, such as 40:60 to 60:40, for example 50:50.

In an embodiment, the controller comprises processing circuitry comprising a processor and a memory, wherein the processing circuitry is in electrical contact with the light detector, wherein the processor and memory comprise: an obtaining module configured to obtain the electronic signal from the light detector, a determining module configured to determine whether to terminate evaporating based on the obtained electronic signal, and a termination module configured to terminate the evaporating if the determining module determined to terminate evaporation.

In an embodiment, the characteristic property of the light received by the light detector comprises at least one of a light intensity, a change in light intensity, a wavelength, a change in wavelength, a polarization, and a change in polarization.

In an embodiment, the characteristic property is a light intensity or a change in light intensity.

In an embodiment, the controller is configured to control the evaporation apparatus to terminate evaporating when the electronic signal indicates that the light intensity or the change in light intensity is above or below a threshold light intensity or change in light intensity, respectively.

In an embodiment, the evaporation apparatus comprises at least one nozzle, wherein the sample holder is configured to hold the sample container in a defined position relative to the at least one nozzle, wherein the evaporation apparatus is configured such that a gas flow is provided through the at least one nozzle so that, when the evaporation apparatus is in use, a vortex is formed in the liquid to be evaporated in the sample container, wherein the controller is configured to control the evaporation apparatus to terminate evaporation by terminating the gas flow to the sample container.

In general, terminating the evaporation may mean at least terminating a relevant action so that at least a rate of evaporation of the liquid in the sample container is reduced. In practice, a liquid may always have a certain vapor pressure and some liquid may still evaporate.

In an embodiment, the evaporation apparatus comprises a heatable liquid tank, wherein the sample holder is arranged such that, when the heatable liquid tank comprises liquid, the sample container is at least partially submerged in the liquid in the heatable liquid tank when placed in the sample holder, wherein the light source, the light detector and the controller are arranged outside of the heatable liquid tank.

In an embodiment, the controller is configured to control the evaporation apparatus to terminate evaporation by terminating heating of the heatable liquid tank.

In an embodiment, the optical path correlates with a predetermined liquid level in the sample container at which the evaporation is to be terminated.

Additionally or alternatively, the light source is configured to emit light with a wavelength in a range of 650-1000 nm, preferably 700-980 nm, more preferably 750-950 nm.

Additionally or alternatively the light detector comprises a phototransistor or a photodiode.

According to a second aspect, there is provided a method for evaporating a part of a liquid to be evaporated in a sample container, the method comprising: performing evaporation of the liquid in the sample container; transferring, using an optical fiber assembly, light from a light source along an optical path through at least a part of the sample container; transferring light that passed along the optical path to a light detector; generating, by the light detector, an electronic signal indicative for a characteristic property of the light detected by the light detector; and terminating the evaporation based on the electronic signal.

In an embodiment, the transferring light from the light source towards the sample container comprises receiving, by a first end of one or more optical fibers, light emitted by a light source, and emitting, by a second end of the one or more optical fibers, at least a part of the light received by the first end along the optical path; wherein the transferring light that passed along the optical path to the light detector comprises: receiving, by a third end of the one or more optical fibers of the one or more optical fibers, light emitted by the second optical fiber end having passed through the sample container; emitting, by a third optical fiber end of the one or more optical fibers, light received by the second optical fiber end towards a light detector; generating, by the light detector, an electronic signal indicative for a characteristic property of the light detected by the light detector; and terminating evaporation based on the electronic signal.

In an embodiment, the evaporation device is an evaporation device according to any one of the embodiments of the evaporation device according to the first aspect.

According to a third aspect, there is provided a liquid level detector system for detecting a liquid level in a sample container. The liquid level may be a meniscus level. The liquid level detector system comprises: a light source; a light detector configured to output an electronic signal indicative for a characteristic property of light received by the light detector; an optical fiber assembly configured to transfer light from the light source along an optical path in which at least a part of the sample container is placeable, and to transfer light that passed along the optical path to the light detector; and a controller in electrical contact with the light detector, wherein the controller is configured to obtain the electronic signal and to detect that the liquid level is at or near the optical path based on the electronic signal.

The liquid level detector system can, for instance, be used in evaporation systems, such as described in the present patent disclosure, or, among others, in capillary viscometers to determine the kinematic viscosity of a sample. In the latter viscometers, which may also be known as Ubbelohde type viscometers or suspended-level viscometers, the liquid level detector system is configured to detect a first and a second liquid level or meniscus to determine the time fluid takes to move along a fixed path length through a vertical U-tube. One aspect of the present patent disclosure is thus a capillary viscometer comprising the liquid level detector system.

In an embodiment, the liquid level detector system further comprises a reflector, comprising a reflective side arranged at an end of, and towards, the optical path. The reflector is preferably a retroreflector, such as a micro cube corner retroreflector. By using a reflector, the light is (at least partially) reflected back along the optical path, and either a receiving fiber end or the same fiber end from which the light originated can be placed at one side of the sample container position, thus reducing the number of fiber positions.

When using a retroreflector, more of the light is reflected in the same direction along the optical path, thus increasing the amount of light received back by the optical fiber assembly and subsequently received by the optical detector. Use of a micro cube corner retroreflector reduces the offset of the return path the light takes relative to the path towards the retroreflector compared to retroreflectors with larger optical solutions for reflecting back light. Alternatively, the reflector may be a diffuse reflector. The diffuse reflector may be configured to reflect a first wavelength range have at least an overlap with a second wavelength range of the light source.

In an embodiment, the reflector is arranged such that, when the sample container is present, light that passed through the sample container is reflected in an opposite direction along the optical path.

In an embodiment, the optical fiber assembly comprises one or more optical fibers comprising a first optical fiber end, a second optical fiber end and a third optical fiber end, wherein the one or more optical fibers are arranged such that the first optical fiber end is positioned to receive the light emitted by the light source; the second optical fiber end is positioned to emit the at least a part of the received light emitted by the light source along the optical path; and the third optical fiber end is positioned to emit the at least a part of the received light that travelled along the optical path towards the light detector.

In an embodiment, the reflector, preferably being a retroreflector, is arranged opposite the second optical fiber end of the one or more optical fibers, wherein the retroreflector is arranged to reflect light emitted by the second optical fiber end back towards the second optical fiber end.

In an embodiment, the optical fiber assembly comprises an optical fiber comprising the first optical fiber end, the second optical fiber end and the third optical fiber end, wherein the first optical fiber comprises an optical splitter, wherein a first fiber optical path through the first optical fiber goes from the first optical fiber end to the second optical fiber end via the optical splitter, and a second fiber optical path goes from the second optical fiber end to the third optical fiber end via the optical splitter. In this way, it becomes possible that only the part of the fiber from the splitter towards the second optical fiber end should extend towards the sample container position. This limits the number of parts towards the sample container, leaving more volume for, for instance, adding more sample containers and/or reducing the size of the apparatus in which the liquid level detector system is to be used.

It will be understood that any further features, embodiments, and advantages related to those further features and embodiments according to the above aspects are readily applied to the present liquid level detector system.

According to fourth aspect, there is provided a control system for an evaporation apparatus for evaporating a part of a liquid in a sample container, the control system comprising: a light source; a light detector configured to output an electronic signal indicative for a characteristic property of light received by the light detector; an optical fiber assembly configured to transfer light from the light source along an optical path in which at least a part of the sample container is placeable, and to transfer light that passed along the optical path to the light detector; and a controller in electrical contact with the light detector, wherein the controller is configured to obtain the electronic signal and to control the evaporation apparatus to terminate evaporation based on the electronic signal.

It will be understood that any features, embodiments, and advantages related to those features and embodiments for the liquid level detection system and evaporation apparatus according to the above aspects are readily applied to the present control system.

According to another aspect, there is provided an evaporation apparatus comprising a control system according to the fourth aspect or a liquid level detection system according to the third aspect.

In general, it will be understood that technical advantages and effects associated with features and/or embodiments of one aspect, apply to the corresponding, similar or equivalent features and/or embodiments the other aspects. It will also be apparent that the features of the various aspects and/or embodiments thereof may be applied to the other aspects and/or embodiments thereof.

### Brief Description of the Drawings

The accompanying drawings are used to illustrate presently preferred non-limiting exemplary embodiments of devices of the present disclosure. The above and other advantages of the features and objects of the disclosure will become more apparent, and the aspects and embodiments will be better understood from the following detailed description when read in conjunction with the accompanying drawings, in which:
Figure 1 is a schematic drawing of an embodiment of the evaporation apparatus according to the present patent disclosure;
Figure 2 is a schematic side view of an embodiment of an optical fiber assembly and a positioned sample container according to the present patent disclosure;
Figure 3 is a schematic side view of another embodiment of an optical fiber assembly and a positioned sample container according to the present patent disclosure;
Figure 4 is a schematic side view of yet another embodiment of an optical fiber assembly and a positioned sample container according to the present patent disclosure;
Figure 5 is a schematic drawing of light rays passing towards and through a sample container when water is present in the sample container;
Figure 6 is a schematic drawing of light rays passing towards and through the sample container of Fig. 5 when air is present in the sample container;
Figure 7 is a schematic top view of the optical fiber assembly of Fig. 4 and the positioned sample container according to Fig. 5 showing light rays passing through the sample container;
Figure 8 is a plot of a representation of a detected optical signal versus time for an optical fiber assembly according to Figure 2; and
Figure 9 is a plot of a representation of a detected optical signal versus time for an optical fiber assembly according to Figures 4 and 7 with a reflector.

### Detailed description

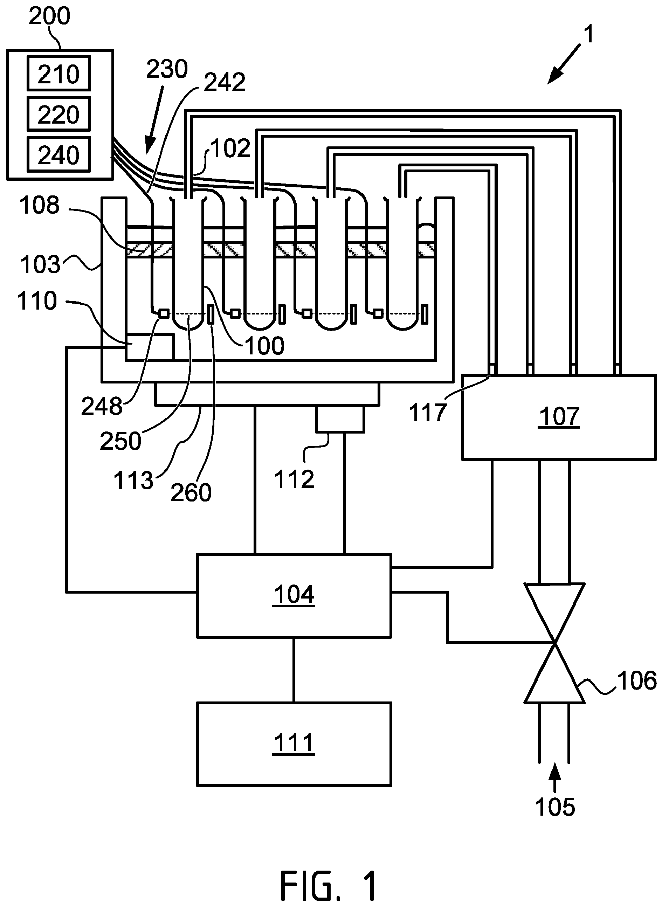

In Fig. 1, an evaporation apparatus, generally designated 1, includes a sample holder 108 for holding a sample container 100. The evaporation apparatus comprises a control system, or liquid level detection system, comprising a light source 210 and a light detector 220 configured to output an electronic signal indicative for a characteristic property of light received by the light detector 220. The control system and/or liquid level detection system comprises an optical fiber assembly 230 is configured to transfer light emitted by the light source 210 along an optical path 250 through at least a part of the sample container 100 when placed in the sample holder 108, and to transfer light that travelled along the optical path 250 to the light detector 220. The control system and/or liquid level detection system comprises a controller 240 in electrical contact with the light detector 220. The controller 240 is configured to obtain the electronic signal and to control the evaporation apparatus 1 to terminate evaporation based on the electronic signal. The light source 210, light detector 220, and controller 240 are included in electronics unit 200 in this embodiment.

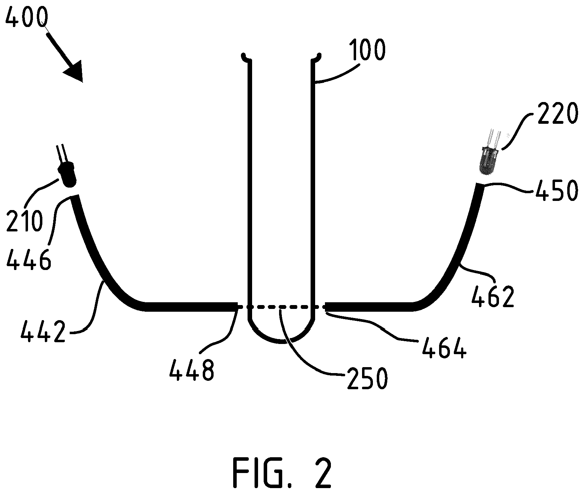

The optical fiber assembly 230 in this embodiment comprises an optical fiber 242, comprising an optical fiber end 248, and a reflector 260. An optical path 250 extends from the optical fiber end 248 towards the reflector 260. The sample container 100 is positioned between the optical fiber end 248 and the reflector 260. The optical path 250 passes through the sample container 100. The evaporation is to terminate in this case when the liquid level drops and comes at or near the optical path 250. The configuration and functioning of the optical fiber assembly 230, the light source 210, the light detector 220, and the controller 240 is further explained below with respect to Figures 2 to 7.

The evaporation apparatus 1 may include a control unit 104 for controlling the evaporation process. The control unit 104 may be configured to include, or may be or perform the functionalities of, the controller 240.

The following describes an embodiment of the evaporation apparatus 1 wherein a heatable liquid tank is used to heat the sample containers to a predetermined temperature. The evaporation apparatus 1 may thus include a heatable liquid tank, here embodied as tank unit 103 for a liquid with an associated heater 113 for heating the liquid. The sample holder 108 may be configured to be inserted into the tank unit 103 and to hold at least one sample container 100. The evaporation system may comprise a temperature sensor 110 connected to the control unit 104. This temperature sensor 110 is arranged to measure the temperature of the liquid in the tank unit 103. The position of this temperature sensor 110 may be distanced from the bottom of the tank unit, allowing for determining of the liquid level in the tank unit. This may be determined by the control unit if the heater is activated but no temperature increase is detected by the temperature sensor.

Further, the evaporation apparatus may include an additional temperature sensor 112 configured to sense the temperature of the heater 113. This way the heater is protected from over-temperatures, which can occur if the tank unit becomes empty which means that the temperature sensor in the tank unit does not sense the temperature.

The control unit 104 may be configured to control the temperature of the liquid in the tank by means of the heater 113 and the temperature sensor 110.

The following describes an embodiment of the evaporation apparatus 1 wherein a gas is blown into the sample container to create a vortex to control the evaporation of liquid from the sample container. The detection of the liquid level and/or end point of the evaporation can, however, also be used in other evaporation systems without such vortex creating means.

The evaporation apparatus 1 may include at least one nozzle 102. The sample holder 108 may be configured to hold the at least one sample container 100 in a defined position relative to the at least one nozzle 102. A pressure regulator 106 is controlled by the control unit 104 and supplied with gas via gas inlet port 105. The gas is fed from pressure regulator 106 to a control valve 107, arranged downstream of the pressure regulator 106. Each of the at least one nozzle 102 may be connected to a corresponding controllable output port 117 of the control valve 107. The control valve 107 is controlled by the control unit 104. The control unit 104 may be configured to control the pressure regulator 106. A set value of the pressure regulator 106 is controlled by the control unit 104.

The evaporation apparatus may include the control valve 107 arranged downstream the pressure regulator 106. The control unit is configured to set the set value of the pressure regulator to a value that causes a predetermined gas flow from each of the at least one nozzle 102, wherein the set value of the pressure depends on the number of activated nozzles connected to the control valve and the predetermined gas flow from the single nozzle. The control unit 104 is operable to select which nozzle 102 to flow gas through by means of the control valve. It is additionally or alternatively possible to plug individual nozzles by means of a cap.

Further, the control unit may be configured to increase the gas pressure from the pressure regulator gradually over a defined time. This way an optimum vortex movement can be achieved through the whole evaporation.

Further, the control unit 104 may be configured to gradually increase the gas pressure from the pressure regulator to the control valve unit. This way the vortex movement is gradually built up which means that splatter can be minimized.

Further, the control valve unit 107 may comprise a plurality of electrically activated valves, each valve being connected to a corresponding nozzle 102. This allows the control unit 104 to control which nozzle or nozzles to activate. Further, the pressure regulator 106 may comprise a pressure sensor which is connected to the control unit 104. This way a measured pressure related to the flow from each nozzle 102 in the evaporator apparatus may be presented on a display unit 111.

In an embodiment, the optical fiber assembly 230 comprises one or more optical fibers comprising at least one optical fiber per sample container 100 for which the liquid level is to be detected and/or for which the evaporation end point is to be detected. The one or more optical fibers comprise a first optical fiber end 446, a second optical fiber end 448 and a third optical fiber end 450. The one or more optical fibers are arranged such that the first optical fiber end 446 is positioned to receive the light emitted by the light source 210; the second optical fiber end 448 is positioned to emit the at least a part of the received light emitted by the light source 210 along the optical path 250; and the third optical fiber end 450 is positioned to emit the at least a part of the received light that travelled along the optical path 250 towards the light detector 220.

An embodiment of the control system or liquid level detection system, generally referred to as "system", is shown in Fig. 2. In the system 400, the one or more optical fibers comprise a first optical fiber 442 and a second optical fiber 462. The first optical fiber 442 comprises the first optical fiber end 446 and the second optical fiber end 448. The second optical fiber 462 also comprises a fourth optical fiber end 464 positioned for receiving the light that passed along the optical path 250. The second optical fiber 462 comprises the third optical fiber end 450 which is positioned relative to the optical detector 220 such that the latter receives at least a part of the light that passed along the optical path 250 and that was received by the fourth optical fiber end 464. The fourth optical fiber end 464 is positioned at the opposite side of the sample container 100 compared to the second optical fiber end 448. The fourth optical fiber end 464 is preferably positioned at the same height as the second optical fiber end 448. In this embodiment, no reflector is required. Various optical parts may be included in the system 400, such as lenses in front of the various optical fiber ends, in order to increase the light received by the various optical fiber ends and, ultimately, the optical detector 220.

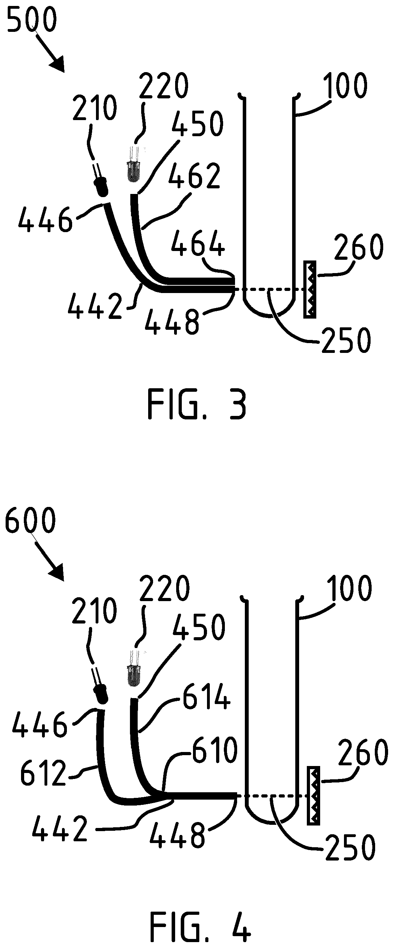

Fig. 3 shows another embodiment of the control system and liquid level detection system, wherein a reflector 260 is used. The system 500 is configured the same as system 400, except for the following. The second optical fiber 462 is now positioned at the same side of the sample container 100 as the first optical fiber 442. The third optical fiber end 464 is positioned adjacent to the second optical fiber end 448. The reflector 260 is positioned in the optical path 250 opposite the second 448 and third 464 optical fiber ends. The reflector 260 in an embodiment is a retroreflector, such that light emitted by the optical fiber end 448 is returned generally towards the same direction. The retroreflector may be a cube-corner array retroreflector, such as a micro-cube-corner array retroreflector. Advantageously, the fibers can now at least partially be bundled in order to decrease the space occupied when used in, for instance, the evaporation apparatus. The retroreflector in this example has a circular shape, but any shape would work.

Fig. 4 shows yet another embodiment of the control system and liquid level detection system, wherein also the reflector 260 is used. The system 600 is configured the same as system 500, except for the following. There now is a single optical fiber 442, and the second optical fiber end 448 also receives the light that passed along the optical path 250 and reflected by the reflector 260. The optical fiber 442 further comprises the third optical fiber end 450. The optical fiber 442 comprises an optical splitter 610. A first fiber optical path through the optical fiber 442 extends from the first optical fiber end 446 to the second optical fiber end 448 via the first optical fiber branch 612 and optical splitter 610 (and vice versa). A second fiber optical path extends from the second optical fiber end 448 to the third optical fiber end 450 via the optical splitter 610 and the second optical fiber branch 614 (and vice versa). In this way, the system 600 contains less parts, is easier to install and takes less space, leaving more volume for, for instance, adding more sample containers and/or reducing the size of the apparatus in which the system 600 is to be used.

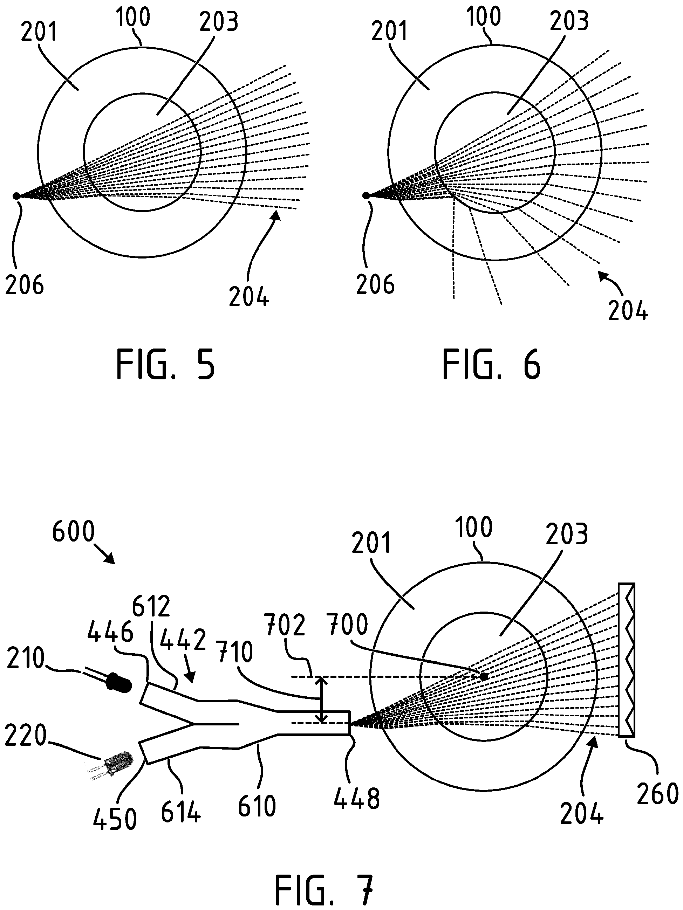

Figures 5 and 6 show the effect of the offset when the medium present in the inside 203 of the sample container 100 is changed from water (Fig. 5) to air (Fig. 6), while the sample container 100 is submerged in water. The sample container 100 comprises container wall 201. Light rays 204 are shown, which originate from point 206. This point 206 could, for instance, be a point on a tip of an optical fiber or a lens or other suitable optical element in front of the tip of the optical fiber. When the medium changes from water to air, the refractive index on the inside 203 of the sample container 100 changes and the light rays are dispersed more in the latter case of air compared to the former case of water present in the inside 203. A situation where the medium inside the container 100 is changed from water to air occurs when, for instance, evaporating water inside the container until the water level has dropped to below the optical path 250.

Figure 7 shows the system 600 in a top view, together with the sample container 100 in a view according to Fig. 5. The optical fiber end 448 is offset by offset 710 relative to radial axis 702, which extends perpendicularly from the longitudinal central axis 700 along which a longitudinal axis of the sample container is typically positioned. The optical path 250 is thus at least partially offset relative to a longitudinal center axis of the sample container 100. The optical path 250 (not shown in Fig. 7 for sake of clarity) may have an angle relative to the radial axis 702, depending on the size of the sample container 100. For instance, the optical path in the top view of Fig. 7 may extend from the second optical fiber end 448 to the middle of retroreflector 260 along its longest side directed to the second optical fiber end 448. The optical path may thus indicate a direction in which the optical fiber end 448 is pointed. In other words, the optical path may indicate an average path that the light travels from the second optical fiber end 448 towards the retroreflector 260.

When a system 400 would be positioned as the system 600 in Fig. 7, the fourth optical fiber end 464 may be positioned anywhere along the length axis of where the reflector 260 is positioned in Fig. 7. Preferably, the fourth optical fiber end 464 surface or tip surface would be approximately perpendicular relative to the optical path 250.

Beneficially, by this offset, more of the light has an angle compared the sample container walls which increases change in intensity when the medium inside the sample container changes from water to air, and thus improves the determination of when to terminate evaporation or the liquid level detection. In other words, there may be an increased sensitivity to a change in refractive index inside the sample container when more of the light has an angle relative to the sample container wall.

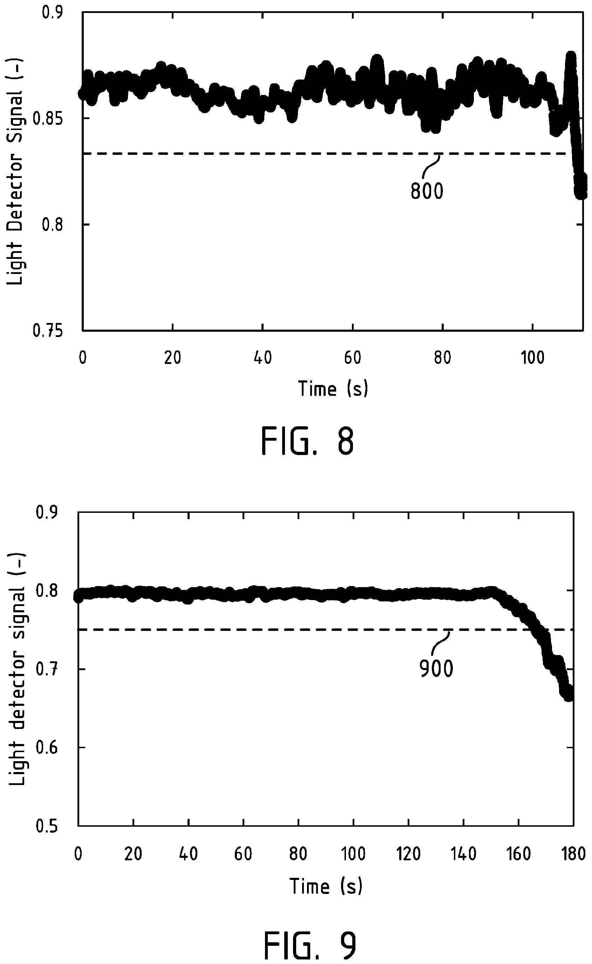

A plot of example data of the light detector signal versus time for the system 400 of Fig. 2 is shown in Fig. 8. Light detector signal data was obtained at a frequency of 100 Hz. A moving average filter averaging the last 100 samples is applied to the data of Fig. 8. The light detector signal is normalized and a light detector signal value of 1 indicates that a saturation level of the light detector, and 0 indicates that no detectable amount of light is received by the light detector. Air is blown at least partially at an angle above the liquid in the sample container, so that the liquid starts to rotate relative to the sample container and a vortex is formed in the liquid. The vortex creates a deep meniscus which is wavy. The noise visible in the signal may be at least partially caused by the wavy meniscus through the optical path 250 or at least through the path the light that is detected by the light detector 220 and has gone through the sample container. In this case, since the light that passed the optical path is received by a second optical fiber, the presence of the wavy meniscus causes scattered light that disturbs the received signal, thus increasing the noise. Clearly, however, the fluid level and/or wanted endpoint is obtained using the system 400. An example threshold level 800 is indicated in the figure. If the (average) signal value goes below this level, the evaporation may be terminated. It is noted that the signal value may be inverted, depending on the type of light detector used and the way it is connected in an electrical circuit. In this case, the evaporation may in that case be terminated when the (average) signal value increases above the level 800.

In general, the evaporation may be terminated when the (average, e.g. moving average) signal value has crossed the threshold level, such as the threshold level 800 or 900. For the data in Fig. 8, the evaporation was not terminated and therefore the signal level reduces also after the threshold level 800 has been crossed. If evaporation would have been terminated, then the signal level would reduce less or remain constant after the threshold level 800 has been crossed.

A plot of example data of the light detector signal versus time for the system 600 is shown in Fig. 9. The data is obtained in the same manner and is treated the same way as for Fig. 8. A retroreflector with circular shape and diameter of 6 mm was used. The distance between the retroreflector and the second optical fiber end 448 was 11 mm. The sample container diameter at which the measurement was performed was 10 mm. The offset of the tip relative to the radial axis 702 was about 2 mm. Comparing the data of Fig. 9 with that of Fig. 8, the system with the retroreflector reduces the amount of noise substantially compared to the data of Fig. 8 of the fiber-to-fiber configuration of system 400 of Fig. 2. Without being bound by any theory, the noise is reduced in the system 600 compared to the system 400 because there is less interference due to the scattering caused by the presence of waves in the vortex as the light is reflected back towards the second fiber end 448 with a much higher speed than the speed of any waves in the vortex. In other words, even though light emitted by the second fiber end 448 towards the retroreflector 260 may be scattered by the irregularities in the liquid caused by the waves in vortex, the light travels back along the same path while the irregularities have not substantially changed in that timescale and thus much of the light returns into the second fiber end 448 so that a part of that returned light is detected by the light detector 220. Close to the same noise reduction as for system 600 is achieved by the system 500.

An example threshold level 900 is indicated in the plot of Fig. 9. For the data in Fig. 9, the evaporation was not terminated and therefore the signal level reduces also after the threshold level 900 has been crossed. If evaporation would have been terminated, then the signal level would reduce less or remain constant after the threshold level 900 had been crossed.

The signal data may be processed such as to determine a moving average for comparison with threshold level in order to determine whether to terminate evaporation or, more generally, to determine that the liquid level has reached the predetermined level of the sample container relative to the optical fiber assembly position, in particular the position of the optical fiber end 448 and, for system 400, that of the fourth optical fiber end 464.

Although the present invention has been described with reference to specific embodiments, also shown in the appended drawings, it will be apparent to those skilled in the art that many variations and modifications can be done within the scope of the invention as described in the specification and defined with reference to the claims below.

## Claims

1. Evaporation apparatus for evaporation of a part of a liquid in a sample container, the evaporation apparatus comprising:
a sample holder for holding the sample container;
a light source;
a light detector configured to output an electronic signal indicative for a characteristic property of light received by the light detector;
an optical fiber assembly configured to transfer light emitted by the light source along an optical path through at least a part of the sample container when placed in the sample holder, and to transfer light that travelled along the optical path to the light detector; and
a controller in electrical contact with the light detector, wherein the controller is configured to obtain the electronic signal and to control the evaporation apparatus to terminate evaporation based on the electronic signal.

2. Evaporation apparatus according to claim 1, wherein the optical path is offset relative to a longitudinal center axis of the sample container, when placed in the sample holder.

3. Evaporation apparatus according to claim 1 or 2, further comprising a retroreflector, comprising a reflective side arranged at an end of and towards the optical path.

4. Evaporation apparatus according to claim 3, wherein the retroreflector is arranged such that, when the sample container is placed in the sample holder, light that passed through the sample container is reflected in an opposite direction along the optical path.

5. Evaporation apparatus according any one of the preceding claims, wherein the optical fiber assembly is configured to:
receive the light emitted by the light source;
emit at least a part of the received light emitted by the light source along the optical path in which at least a part of the sample container is placeable;
receive the light that travelled along the optical path; and
emit at least a part of the received light that travelled along the optical path towards the light detector.

6. Evaporation apparatus according to claim 5, wherein the optical fiber assembly comprises one or more optical fibers comprising a first optical fiber end, a second optical fiber end and a third optical fiber end, wherein the one or more optical fibers are arranged such that:
the first optical fiber end is positioned to receive the light emitted by the light source;
the second optical fiber end is positioned to emit the at least a part of the received light emitted by the light source along the optical path; and
the third optical fiber end is positioned to emit the at least a part of the received light that travelled along the optical path towards the light detector.

7. Evaporation apparatus according to claim 6, in dependence of any one of claim 3 and 4, wherein the retroreflector is arranged opposite the second optical fiber end of the one or more optical fibers, wherein the retroreflector is arranged to reflect light emitted by the second optical fiber end back towards the second optical fiber end.

8. Evaporation apparatus according to claim 6 or 7, wherein the one or more optical fibers comprise a first optical fiber comprising the first optical fiber end, the second optical fiber end and the third optical fiber end,
wherein the first optical fiber comprises an optical splitter, wherein a first fiber optical path through the first optical fiber goes from the first optical fiber end to the second optical fiber end via the optical splitter, and a second fiber optical path goes from the second optical fiber end to the third optical fiber end via the optical splitter.

9. Evaporation apparatus according to any one of the preceding claims, wherein the controller comprises processing circuitry comprising a processor and a memory, wherein the processing circuitry is in electrical contact with the light detector, wherein the processor and memory comprise:
an obtaining module configured to obtain the electronic signal from the light detector,
a determining module configured to determine whether to terminate evaporating based on the obtained electronic signal, and
a termination module configured to terminate the evaporating if the determining module determined to terminate evaporation.

10. Evaporation apparatus according any one of the preceding claims, wherein the characteristic property of the light received by the light detector comprises at least one of a light intensity, a change in light intensity, a wavelength, a change in wavelength, a polarization, and a change in polarization.

11. Evaporation apparatus according to claim 10, wherein the characteristic property is a light intensity or a change in light intensity,
wherein preferably the controller is configured to control the evaporation apparatus to terminate evaporating when the electronic signal indicates that the light intensity or the change in light intensity is above or below a threshold light intensity or change in light intensity, respectively.

12. Evaporation apparatus according to any one of the preceding claims, wherein the evaporation apparatus comprises at least one nozzle, wherein the sample holder is configured to hold the sample container in a defined position relative to the at least one nozzle, wherein the evaporation apparatus is configured such that a gas flow is provided through the at least one nozzle so that, when the evaporation apparatus is in use, a vortex is formed in the liquid to be evaporated in the sample container,
wherein the controller is configured to control the evaporation apparatus to terminate evaporation by terminating the gas flow to the sample container.

13. Evaporation apparatus according to any one the preceding claims, comprising a heatable liquid tank, wherein the sample holder is arranged such that, when the heatable liquid tank comprises liquid, the sample container is at least partially submerged in the liquid in the heatable liquid tank when placed in the sample holder, wherein the light source, the light detector and the controller are arranged outside of the heatable liquid tank,
wherein preferably the controller is configured to control the evaporation apparatus to terminate evaporation by terminating heating of the heatable liquid tank.

14. Evaporation apparatus according to any one of the preceding claims, wherein:
the optical path correlates with a predetermined liquid level in the sample container at which the evaporation is to be terminated; and/or
the light source is configured to emit light with a wavelength in a range of 650-1000 nm, preferably 700-980 nm, more preferably 750-950 nm; and/or
the light detector comprises a phototransistor or photodiode.

15. Method for evaporating a part of a liquid to be evaporated in a sample container, the method comprising:
performing evaporation of the liquid in the sample container;
transferring, using an optical fiber assembly, light from a light source along an optical path through at least a part of the sample container;
transferring light that passed along the optical path to a light detector;
generating, by the light detector, an electronic signal indicative for a characteristic property of the light detected by the light detector; and
terminating the evaporation based on the electronic signal.
